# EUROPEAN PATENT SPECIFICATION

(11) **EP 2 113 323 B1**
(45) Date of publication and mention of the grant of the patent: **27.06.2012**
(21) Application number: 08075332.0
(22) Date of filing: 02.05.2008
(51) Int. Cl.: B23B 31/02, B23B 31/20

(54) **Rotational tool holder with adjusting means**
Drehwerkzeughalter mit Einstellungsvorrichtung
Support d'outil rotatif avec supports d'ajustement

(43) Date of publication of application: 04.11.2009
(73) Proprietor: G.J. Lammers Holding B.V., 7482 KW HAAKSBERGEN (NL)
(72) Inventor: Lammers, Gerrit Jan, 7482 KW Haaksbergen (NL); Egberink, Rob Franciscus Alfonses, 7524 CS Enschede (NL)
(74) Representative: 't Jong, Bastiaan Jacob

(56) References cited:
- EP-A- 0 418 041
- FR-A- 2 270 976
- US-A1- 2006 115 337
- US-A1- 2007 053 758

## Description

The invention relates to a rotating tool holder comprising:
- a body with a conical receiving space having a centerline coinciding with the rotation axis;
- a collet arranged in the conical receiving space;
- a clamping nut arranged by a thread on the body for pushing the collet into the conical receiving space, such that a tool can be clamped in the collet.

When machining products, the accuracy of the machining operations are determined by a number of aspects. One of the aspects is the accuracy of the guides which position the tool in relation to the object to be machined. Another aspect is the accuracy of the clamping of the object to the machine. A third aspect is the accuracy determined by play in the driving of the tool. For this latter aspect inaccuracies can result in a not fully balanced rotation of the tool, which results in a so-called runout.

In the field of automated machining of products with for example computer numerical control (CNC) machines, the inaccuracy as a result of the drive line of the rotation tools is a important problem. CNC machines usually use a revolver head, which comprises a number of rotational tools which can be used by the machine when necessary. Such a revolver head has in itself an inaccuracy, which sums up to the inaccuracy of the machining operation performed by a tool from the revolver head.

It is difficult to produce all parts of a machine at such an accuracy that the runout of rotational tools can be reduced under 25 micron.

This is in particular for the case in which the tools are clamped by a collet.

Different clamping systems are known, such as a Weldon or whistle notch clamping system, hydraulic clamping systems or shrink fit clamping systems. The disadvantage of such clamping systems is that the costs are substantially higher for a tool system in comparison to a collet clamping system.

A number of rotating tool holders including different clamping systems and different mechanisms for compensation of runout are described in US 2007/0053758, EP 0 418 041, and FR 2270 976. A rotating tool holder corresponding to the preamble of claim 1 is described in US 2006/115337. The known rotating tool holders have costly clamping systems and/or impractical compensation mechanisms for any runout.

It is now an object of the invention to provide a simple and cost effective solution for reducing the runout for rotational tool holders.

The object is achieved by a rotating tool holder, which is characterized by adjusting means for locally biasing the clamping nut in axial direction at a position on the radial surface of the clamping nut.

A tool clamped in a collet clamping system is generally not absolutely centered as the play between the clamping nut and the body as a result of the thread will produce a slightly uneven force to the collet, which will as a result clamp the tool not exactly symmetrical. As the tool is not clamped absolutely symmetrical, the tool will have some runout.

With the invention the clamping nut is biased by the adjusting means such that the differences in the pressure exerted by the clamping nut onto the collet are compensated such that the collet clamping system can clamp the tool symmetrical and the runout can be reduced.

Due to the provision of adjusting means it is possible to check whether a tool clamped in a rotating tool holder according to the invention has some runout and adjust for this runout by adjusting with the adjusting means. In an embodiment of the rotating tool holder according to the invention the adjusting means comprise a number of adjusters evenly distributed and at a fixed distance from the centerline of the clamping nut, which adjusters act between the clamping nut and the body by generating a pretensioning force.

With the adjusters it is possible to provide locally an additional force to the clamping nut, which can compensate for any irregularities resulting in a small angle of the tool in relation to the rotation axis. Preferably the adjusters are bolts. Bolts can easily be adjusted and can provide the required strength for providing the pretensioning force.

In another embodiment of the tool holder according to the invention the clamping nut comprises a flange, in which the adjusting means are arranged, and wherein the adjusting means act between the flange and the body. Preferably the flange is a ring mounted on the clamping nut. The advantage of a flange is that there is sufficient space for the adjusters to be arranged and a direct connection is provided for between the adjusting means and the clamping nut.

In another preferred embodiment of the tool holder according to the invention an annular pressure plate is arranged on the body for co-acting with the adjusting means. The body is often a regular tool holder. By providing an annular pressure plate on the regular tool holder a support surface is provided to which the adjusting means can exert the force necessary for adjusting.

In yet another embodiment of the tool holder according to the invention the tool holder comprises an adjusting ring arranged on the body, which adjusting ring comprises the adjusting means, which adjusting means act between the adjusting ring and the clamping ring.

Preferably the adjusting ring has an inwardly directed flange, which overhangs the clamping nut, such that the adjusting means act between the inwardly directed flange and the clamping nut. Such an embodiment requires a minimal change to regular tool holders for providing the advantages of the invention.

These and other features of the invention will be elucidated in conjunction with the accompanying drawings.
Figure 1 shows an exploded perspective view of a first embodiment of a rotating tool holder according to the invention.
Figure 2 shows a cross-sectional view of the embodiment according to figure 1.
Figure 3 shows a cross-sectional view of a second embodiment of a rotational tool holder according to the invention.

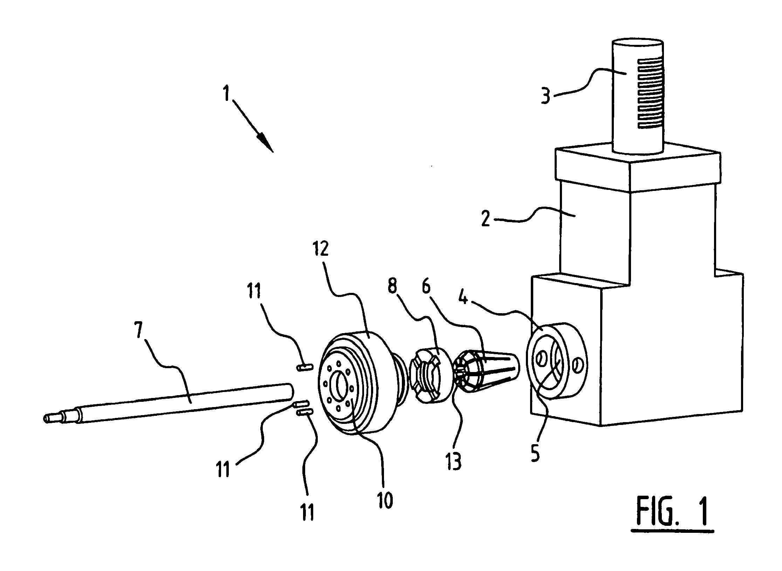

Figure 1 shows a first embodiment of a rotational tool holder 1 according to the invention. Such rotational tool holders 1 are commonly used for revolver heads used on CNC machines.

The rotational tool holder 1 has a gear box 2 with an input shaft 3 with which a body 4 is rotated. This body 4 has a conical receiving space 5 in which a collet 6 is received.

The collet 6 comprises a number of fingers which can be pressed inwardly when the collet 6 is pushed into the conical receiving space 5 of the body 4. These fingers of the collet 6 are able to clamp a tool 7.

The collet 6 is pushed into the body 4 by a clamping nut 8 which is generally arranged by a thread on the body 4. In this case the clamping nut 8 is provided on the outside with a thread such that the clamping nut 8 can be screwed into the opening of the conical receiving space 5.

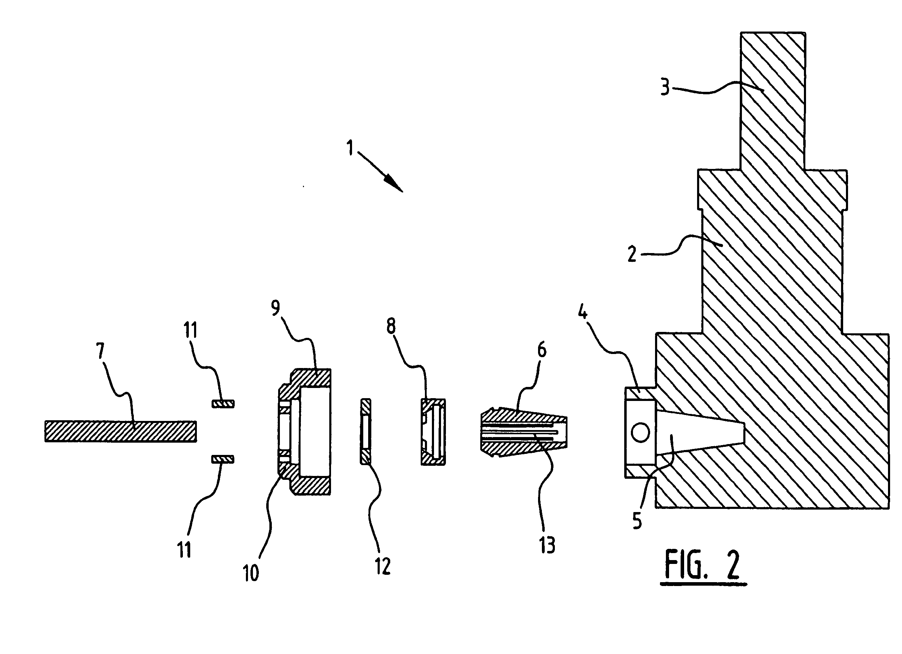

On the body 4 an adjusting ring 9 is arranged, which comprises an inwardly directed flange 10. In this inwardly directed flange 10 a number of adjusters 11 are arranged by thread (see also figure 2).

In assembled state the adjusters 11 can be screwed into the flange and can be brought in contact with the clamping nut 8. In this embodiment a protective washer 12 is placed in between the clamping nut 8 and adjusters 11.

In use, the tool 7 is inserted into the rotational tool holder 1 and more in particular into the cylindrical receiving space 13 of the collet 6. Then the clamping nut 8 is tightened such that the fingers of the collet 6 will clamp around the tool 7 and keep it in the body 4 of the rotational tool holder 1.

As a result of the play in the thread with which the clamping nut 8 is arranged in the body 4, small differences in pressure on the separate fingers of the collet 6 can rise. This will result in a small displacement of the tool 7 in relation to the rotation axis which will cause runout. In order to adjust for this misalignment caused by the play in the thread of the clamping nut 8, the adjusters 11 can apply additional force to the clamping nut 8 and as result onto the fingers of the collet 6. By adjusting the separated adjusters 11, the misalignment can be removed and a near perfect alignment of the tool 7 in relation to the rotation axis can be achieved.

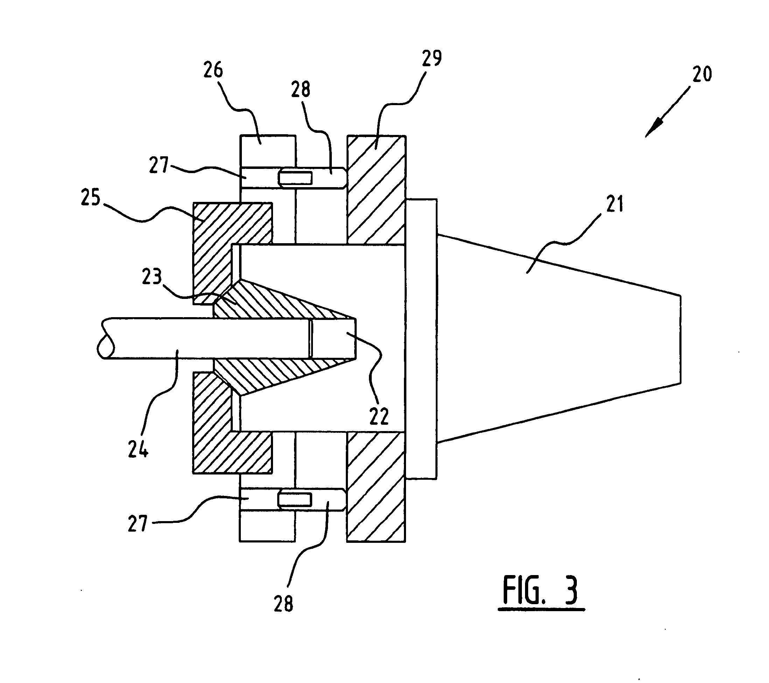

In figure 3 a second embodiment of a rotation tool holder 20 is shown. The rotational tool holder 20 comprises a common tool holder body 21 in which a conical receiving space 22 is provided. In this conical receiving space 22 a collet 23 is placed, which clamps a tool 24. The collet 23 is pushed into the conical receiving space 22 by a clamping nut 25. This clamping nut 25 is arranged on the outside of the tool holder body 21 by thread.

On the clamping nut 25 a flange 26 is arranged, which is in this particular embodiment a ring mounted to the clamping nut 25 by for example a thread.

The flange 26 has a number of holes 27 in which adjusters 28 are arranged. These adjusters 28 are in contact with an annular pressure plate 29 which in turn is arranged on the tool holder.

With the adjusters 28 it is possible to locally apply some force on the clamping nut 25, which results in an adjustment of the pressure, the clamping nut 25 applies to the collet 23.

When arranging a tool in a tool holder according to the invention, the clamping nut 8, 25 is first tightened to secure the tool 7, 24 into the tool holder 1, 20. Then the tool 7, 24 is measured, in particular the runout of the tool 7, 24. Runout is measured by rotating the tool 7, 24 and measuring the difference in relation to the rotation axis. In this way it is possible to measure the rotation angle at which the tool 7, 24 has the largest deviation from the rotation axis. Then one or two of the adjusters 11, 28 are tightened to reduce this deviation. It is preferred that the adjusters 11, 28 are marked such that in a subsequent adjustment not the same adjusters are tightened or loosened. After the first adjustment the tool 7, 24 is again rotated to measure the deviation and after a few small further adjustments the runout of the tool 7, 24 can be reduced to almost none.

## Claims

1. Rotating tool holder (1) comprising:
- a body (4) with a conical receiving space (5) having a centerline coinciding with the rotation axis;
- a collet (6) arranged in the conical receiving space (5);
- a clamping nut (8) arranged by a thread on the body (4) for pushing the collet (6) into the conical receiving space (5), such that a tool (7) can be clamped in the collet (6);
**characterized by**
- adjusting means (10, 11, 26, 27, 28) for locally biasing the clamping nut (8) in axial direction at a position on the radial surface of the clamping nut (8).

2. Rotating tool holder (1) according to claim 1, wherein the adjusting means (10, 11, 26, 27, 28) comprise a number of adjusters (11, 28) evenly distributed and at a fixed distance from the centerline of the clamping nut (8), which adjusters (11, 28) act between the clamping nut (8) and the body (4) by generating a pretensioning force.

3. Tool holder (1) according to claim 2, wherein the adjusters (11, 28) are bolts.

4. Tool holder (1) according to any of the preceding claims, wherein the clamping nut (8) comprises a flange (10, 26), in which the adjusting means (11, 18) are arranged, and wherein the adjusting means (11, 18) act between the flange (10, 26) and the body (4).

5. Tool holder (1) according to claim 4, wherein the flange (10, 26) is a ring mounted on the clamping nut (8).

6. Tool holder (1) according to claim 4 or 5, comprising an annular pressure plate (29) arranged on the body (4) for co-acting with the adjusting means (11, 18).

7. Tool holder (1) according to any of the preceding claims 1 - 3, comprising an adjusting ring (9) arranged on the body, which adjusting ring (9) comprises the adjusting means (10, 11), which adjusting means act between the adjusting ring and the clamping nut.

8. Tool holder (1) according to claim 7, wherein the adjusting ring (9) has an inwardly directed flange (10), which overhangs the clamping nut (8), such that the adjusting means (10, 11) act between the inwardly directed flange (10) and the clamping nut (8).

## Patentansprüche

1. Drehbarer Werkzeughalter (1) umfassend:
- einen Körper (4) mit einem konischen Aufnahme-Raum (5), der eine Mittelachse umfasst, die mit der Drehachse übereinstimmt;
- eine Klemm-Hülse (6), die in dem konischen Aufnahme-Raum (5) angeordnet ist;
- eine Klemm-Mutter (8), die über ein Gewinde an dem Körper (4) angeordnet ist, um die Klemm-Hülse (6) in den konischen Aufnahme-Raum (5) zu drängen, so dass ein Werkzeug (7) in der Klemm-Hülse (6) eingeklemmt werden kann;
**gekennzeichnet** über
- Anpass-Mittel (10, 11, 26, 27, 28) für ein örtliches Vorspannen der Klemm-Mutter (8) in eine axiale Richtung an einer Position an der radialen Fläche der Klemm-Mutter (8).

2. Drehbarer Werkzeughalter (1) gemäß Anspruch 1, bei dem die Anpass-Mittel (10, 11, 26, 27, 28) eine Anzahl von Anpasselementen (11, 28) umfassen, die gleichmäßig und in einer fixierten Entfernung von der Mittellinie der Klemm- Mutter (8) verteilt sind, wobei die Anpass-Mittel (11, 28) zwischen der Klemm-Mutter (8) und dem Körper (4) über ein Erzeugen einer Vorspannkraft wirken.

3. Werkzeughalter (1) gemäß Anspruch 2, bei dem die Anpass- Elemente (11, 28) als Bolzen ausgebildet sind.

4. Werkzeughalter (1) gemäß einem der vorstehenden Ansprüche, bei dem die Klemm-Mutter (8) einen Flansch (10, 26) umfasst, in dem die Anpass-Mittel (11, 18) angeordnet sind, und bei dem die Anpass-Mittel (11, 18) zwischen dem Flansch (10, 26) und dem Körper (4) wirken.

5. Werkzeughalter (1) gemäß Anspruch 4, bei dem der Flansch (10, 26) als ein Ring ausgebildet ist, der an der Klemm- Mutter (8) befestigt ist.

6. Werkzeughalter (1) gemäß Anspruch 4 oder 5, umfassend eine ringförmige DruckPlatte (29), die an dem Körper (4) angeordnet ist, für ein Zusammenwirken mit den Anpass-Mitteln (11, 18).

7. Werkzeughalter (1) gemäß einem der vorstehenden Ansprüche 1 bis 3, umfassend einen Anpass-Ring (9), der an dem Körper angeordnet ist, wobei der Anpass-Ring (9) die Anpass-Mittel (10, 11) umfasst, wobei die Anpass-Mittel zwischen dem Anpass-Ring und der Klemm-Mutter wirken.

8. Werkzeughalter (1) gemäß Anspruch 7, bei dem der Anpass-Ring (9) einen nach innen gerichteten Flansch (10) umfasst, der die Klemm-Mutter (8) überlagert, so dass die Anpass-Mittel (10, 11) zwischen dem nach innen gerichteten Flansch (10) und der Klemm-Mutter (8) wirken.

## Revendications

1. Porte-outil rotatif (1) comprenant :
un corps (4) avec un espace de réception conique (5) ayant un axe central coïncidant avec l'axe de rotation ;
une pince de serrage (6) agencée dans l'espace de réception conique (5) ;
un écrou de serrage (8) agencé grâce à un filetage sur le corps (4) pour pousser la pince de serrage (6) dans l'espace de réception conique (5), de sorte qu'un outil (7) peut être serré dans la pince de serrage (6) ;
**caractérisé par** :
des moyens d'ajustement (10, 11, 26, 27, 28) pour solliciter localement l'écrou de serrage (8) dans la direction axiale dans une position sur la surface radiale de l'écrou de serrage (8).

2. Porte-outil rotatif (1) selon la revendication 1, dans lequel les moyens d'ajustement (10, 11, 26, 27, 28) comprennent un certain nombre d'organes de réglage (11, 28) répartis régulièrement et à une distance fixe de l'axe central de l'écrou de serrage (8), lesquels organes de réglage (11, 28) agissent entre l'écrou de serrage (8) et le corps (4) en générant une force de pré-tension.

3. Porte-outil (1) selon la revendication 2, dans lequel les organes de réglage (11, 28) sont des boulons.

4. Porte-outil (1) selon l'une quelconque des revendications précédentes, dans lequel l'écrou de serrage (8) comprend un rebord (10, 26), dans lequel les moyens d'ajustement (11, 18) sont agencés, et dans lequel les moyens d'ajustement (11, 18) agissent entre le rebord (10, 26) et le corps (4).

5. Porte-outil (1) selon la revendication 4, dans lequel le rebord (10, 26) est une bague montée sur l'écrou de serrage (8).

6. Porte-outil (1) selon la revendication 4 ou 5, comprenant une plaque de pression annulaire (29) agencée sur le corps (4) pour co-agir avec les moyens d'ajustement (11, 18).

7. Porte-outil (1) selon l'une quelconque des revendications 1 à 3 précédentes, comprenant une bague d'ajustement (9) agencée sur le corps, laquelle bague d'ajustement (9) comprend les moyens d'ajustement (10, 11), lesquels moyens d'ajustement agissent entre la bague d'ajustement et l'écrou de serrage.

8. Porte-outil (1) selon la revendication 7, dans lequel la bague d'ajustement (9) a un rebord (10) dirigé vers l'intérieur, qui surplombe l'écrou de serrage (8), de sorte que les moyens d'ajustement (10, 11) agissent entre le rebord (10) dirigé vers l'intérieur et l'écrou de serrage (8).
